# EUROPEAN PATENT APPLICATION

(11) **EP 2 941 957 A1**
(43) Date of publication of application: **11.11.2015**
(21) Application number: 15169762.0
(22) Date of filing: 23.12.2004
(51) Int. Cl.: A01N 63/02, A01N 43/36, A01N 47/04, A01N 37/46, A01N 43/78

(54) **METHODS AND COMPOSITIONS PROVIDING AGRONOMICALLY BENEFICAL EFFECTS IN LEGUMES AND NON-LEGUMES**

(30) Priority: 23.12.2003 US 532258 P; 06.07.2004 US 585609 P
(62) Divisional of application: 04815263.1
(71) Applicant: Novozymes Bioag A/S, 2880 Bagsvaerd (DK)
(72) Inventor: SMITH, R., Stewart, Pewaukee, WI Wisconsin 53072 (US); OSBURN, Robert, M., Mequon, WI Wisconsin 53092 (US); KOSANKE, John, W, Waukesha, WI Wisconsin 53186 (US)
(74) Representative: Rasmussen, Preben

(57) **Abstract**

Methods and compositions for enhancing plant characteristics of leguminous and nonleguminous crops include combination treatments with at least one fungicide, and one or more nod factors. Optionally, an inoculant composition may be used with the invention to enhance nodulations and nitrogen fixation with legumes.

## Description

This application claims benefit of priority under 35 U.S.C. § 119 from U.S. Provisional Application Serial No. 60/532,258, filed December 23, 2003, and U.S. Provisional Application Serial No. 60/585,609, filed July 6, 2004. Each application is incorporated herein by reference in its entirety.

The invention relates to enhancing plant stand, growth, vigor and yield properties of leguminous and non-leguminous crops, and soybean and corn crops in particular.

Leguminous plants include a large group of agriculturally useful and economically important crops such as soybean, alfalfa, peanut, pea, lentil, bean, and clover, among others. Non-leguminous plants also comprise a group of agriculturally useful and economically important crops which include field crops such as corn, cereals, cotton, and canola, and vegetable crops such as potatoes, cucumbers, beets, lettuce, and cantaloupe.

Pathogens responsible for diseases of legumes and non-legumes have become well-established in most, if not all, production areas, and have been responsible for significant economic losses. Examples of disease-causing microorganisms include *Phytophthora, Rhizoctonia, Fusarium, Pythium*, *Phomopsis, Sclerotinia,* and *Phakopsora* species.

Chemical fungicide and insecticide treatments have become widely used to protect crops from seedborne, soilborne, and foliar diseases and insect damage. However, although fungicide treatments generally improve the health of root systems and increase the plant stand, such treatments do not always ensure higher yields or improved vigor.

Legume plants produce characteristic nitrogen-fixing nodules in symbiosis with soil bacteria of the genera *Rhizobium, Bradyrhizobium, Azorhizobium, Mesorhizobium*, *Allorhizobium* and *Sinorhizobium* (collectively known as "rhizobia"). Rhizobial interaction with legume plants is controlled by strict species specificity, i.e., symbiotic nitrogen fixation occurs when plant and bacteria are properly matched. Non-legume plants typically do not produce nodules. *Bradyrhizobium parasponia* is a unique example of nodulation with non-legumes.

Signal exchange between plant and bacteria is initiated by secretion of signal molecules, such as flavonoids or isoflavonoids, in root exudates. These plant signal molecules then activate nodulation (nod) genes in the rhizobia, resulting in rhizobial biosynthesis and secretion of lipochitooligosaccharides (LCOs), which are plant-inducing molecules. These LCOs, also termed "nod factors," trigger the infection process and induce nodule formation on the host plant roots. Thus, nodule formation results from coordinated expression of plant and bacterial genes.

Bacterial nodA, nodB, nodC and nodD genes are simultaneously involved in the production of extracellular nod factors. The ABC genes are conserved among all rhizobia, while the interaction of the nodD regulator gene product with plant flavonoids determines, at least in part, host specificity. All rhizobia produce complex mixtures of nod factors.

Nod factors purified from rhizobial cultures or chemically synthesized nod factors induce nodulation via root hair deformation and curling, preinfection thread formation and cortical cell division in host plants at picomolar or higher concentrations.

Nod factors are constructed of a backbone of 3-6 residues of ß-1,4-linked-N-acetyl-D-glucosamine, with the N acetyl group of the terminal non-reducing end replaced by an acyl chain. The number of carbons in the fatty acid typically varies from 16 to 20 and the number of double bonds varies from 0 to 4.

Described herein is the inventors' surprising discovery that superior results with respect to plant stand, growth, vigor or yield of leguminous and non-leguminous plants or crops are achieved using a treatment of fungicide, insecticide, or a combination thereof, with nod factors, either with or without a rhizobial inoculant. In many instances, study results demonstrated significant improvement in the combination over the individual treatments alone.

As a first aspect, the invention provides a method of enhancing a plant characteristic, comprising treating a seed, seedling, root or plant, or combinations thereof, with a plant inducer and a fungicide, an insecticide or combinations thereof, thereby enhancing a plant characteristic. The plant characteristic may be plant stand, growth, vigor or yield, or combinations thereof.

The methods may further comprise treating a seed, seedling root or plant, or combinations thereof, with an inoculant composition.

In another aspect, the invention provides compositions comprising a plant inducer and a fungicide, insecticide, or combination thereof. Compositions of the invention may also comprise an inoculant composition.

As used herein and in the art, the term "agronomically beneficial" describes compositions that, when applied to soil, seeds, seedlings, roots or plants, result in enhancement (which may be statistically significant) of plant characteristics such as plant stand, growth, vigor or yield in comparison to non-treated soil, seeds, seedlings, roots or plants. Similarly, "enhancing" or "enhancement," when used herein, refers to improvement (which may be statistically significant) in any of the above plant characteristics in comparison to non-treated soil, seeds, seedlings, roots or plants.

A "fungicide," as used herein and in the art, is an agent that kills or inhibits fungal growth. As used herein, a fungicide "exhibits activity against" a particular species of fungi if treatment with the fungicide results in killing or growth inhibition of a fungal population (e.g., in the soil) relative to an untreated population.

Effective fungicides in accordance with the invention will suitably exhibit activity against a broad range of pathogens, including but not limited to *Phytophthora, Rhizoctonia*, *Fusarium, Pythium*, *Phomopsis* or *Sclerotinia* and *Phakopsora* and combinations thereof.

Commercial fungicides may be suitable for use in the present invention. Suitable commercially available fungicides include, but are not limited to, PROTÉGÉ, RIVAL or ALLEGIANCE FL or LS (Gustafson, Plano, TX), WARDEN RTA (Agrilance, St. Paul, MN), APRON XL, APRON MAXX RTA or RFC, MAXIM 4FS or XL (Syngenta, Wilmington, DE), CAPTAN (Arvesta, Guelph, Ontario) and PROTREAT (Nitragin Argentina, Buenos Ares, Argentina). Active ingredients in these and other commercial fungicides include, but are not limited to, fludioxonil, mefenoxam, azoxystrobin and metalaxyl. Commercial fungicides are most suitably used in accordance with the manufacturer's instructions at the recommended concentrations.

As used herein, an insecticide "exhibits activity against" a particular species of insect if treatment with the insecticide results in killing or inhibition of an insect population relative to an untreated population.

Effective insecticides in accordance with the invention will suitably exhibit activity against a broad range of insects including, but not limited to, wireworms, cutworms, grubs, corn rootworm, seed corn maggots, flea beetles, chinch bugs, aphids, leaf beetles, and stink bugs.

Commercial insecticides may be suitable for use in the present invention. Suitable commercially-available insecticides include, but are not limited to, CRUISER (Syngenta, Wilmington, DE), GAUCHO and PONCHO (Gustafson, Plano, TX). Active ingredients in these and other commercial insecticides include thiamethoxam, clothianidin, and imidacloprid. Commercial insecticides are most suitably used in accordance with the manufacturer's instructions at the recommended concentrations.

An "agriculturally suitable carrier," as used herein and in the art, is a generally inert vehicle for the active components of the composition. Carriers may include liquids, wettable or dry-use powders, flowables, peats or dusts. Carriers, together with the active components, can be applied in slurry, ready-mix, or mist-type treaters, or can be mixed directly as a dust in the planter or drill box.

A "plant inducer," as used herein and in the art, refers generally to nod factors that participate in plant-microorganism signaling to induce nodule formation in legumes, or plant growth promotion in legumes and/or non-legumes. A "nod factor" is a signal molecule produced under the direct control of Nod genes of rhizobia in response to flavonoid or isoflavonoid secretion by a host plant, or is a synthetic or bioengineered version of naturally occurring nod gene products. The term "nod factor" is used interchangeably with "lipochitooligosaccharide" or "LCO."

Nod factors may be purified from bacterial sources, may be used in unpurified form, or may be synthetic. As will be appreciated, useful nod factors may be naturally occurring, e.g., derived from rhizobia by inducement followed by purification or otherwise, or may be engineered by methods known in the art of biotechnology to produce or alter characteristics of the LCO molecule to provide further useful features.

As will be appreciated, rhizobia produce complex mixtures of LCO molecules and such mixtures, as well as isolated or purified LCO molecules, are contemplated herein. Moreover, rhizobia of different species produce nod factors of differing host ranges. For example, nod factors which may be suitably used for soybeans are derived from, e.g., *Bradyrhizobium japonicum* or *Sinorhizobium fredii.* Nod factors which may be suitably used for peanuts are derived from *Bradyrhizobium* specie for peanut. For alfalfa, *Sinorhizobium meliloti*-derived factors may be used. Nod factors derived from *Rhizobium leguminosarum* biovar *viceae* and biovar *trifolii* may be used for peas and clover, respectively. *Sinorhizobium fredii* strain NGR234 is an example of rhizobia that produces a broad range of nod factors.

Suitable nod factors for use with the present invention may include those described in U.S. Patent No. 5,549,718 to Lerouge et al., U.S. Patent No. 5,646,018 to Broughton et al., U.S. Patent No. 5,321,011 to Stacey et al. and U.S. Patent No. 5,175,149 to Stacey et al., each of which is incorporated herein by reference in its entirety.

In particular, suitable nod factors include, but are not limited to, Bj Nod-V (C18:1), Bj Nod-V (Ac, C18:1), Bj Nod-V (C16:0), Bj Nod-V (Ac, C16:0), Bj Nod-V (C16:1), NodRm and Ac-NodRm and NodNGR type factors. The nomenclature used to describe nod factors is standard in the art and, in most cases, is to be understood to refer to the species (e.g., *Bradyrhizobium japonicum*), the number of N-acetylglucosamine residues (e.g., 5 or "V"), substitutions on the reducing terminal sugar residue (e.g., "Ac" representing acetyl), and the number of carbons in the acyl chain and degree of unsaturation (e.g., C16:0). However, it is to be understood that the nod factor nomenclature is in a state of flux, and any given nod factor is not to be excluded from consideration for use in the invention due to changes in terminology.

Suitably, nod factors may be provided in any compatible solvent, such as DMSO, and added to the compositions at any time prior to application. Nod factors may be suitably purified prior to incorporation in the present compositions. One example of a commercially suitable nod factor product is OPTIMIZE (Nitragin, Milwaukee, WI).

A method for producing nod factor products may include treating cells, such as *Bradyrhizobium japonicum* or other rhizobia, with a plant signal molecule such as genistein or other nod factor inducer, in an agriculturally suitable carrier to produce an induced culture nod factor product. The induced culture nod factor product may be further modified by tangentially filtering out the cells from the culture to produce a cell-free induced culture nod factor product, which may then be passed through a resin column to produce a purified nod factor product. Nod factors may be further purified by removing any solvent present, purifying the nod factor with HPLC, and freeze-drying the nod factor to produce a further purified nod factor product.

Compositions comprising nod factors having concentrations less than about 10⁻⁵ Molar, and more particularly, less than about 10⁻⁷ Molar may be used. Typically, the nod factors have a concentration of greater than about to 10⁻¹² Molar, and more particularly, greater than about 10⁻⁹ Molar.

In some embodiments, an inoculant composition may be used in the methods and compositions of the invention to further enhance nodulation and nitrogen fixation. As used herein and in the art, the term "inoculant composition" refers generally to compositions or materials that introduce compatible microorganisms either onto an external surface of seeds or in the seed furrow. In some embodiments, the methods and compositions in accordance with the present invention may further include use of inoculant compositions to induce nodule formation and nitrogen fixation, when applied to or with leguminous seeds, or to enhance germination, early vigor and/or rate of plant growth for either legumes or non-legumes. Although no particular degree of nodulation or enhanced growth is required, seed inoculants of the present invention provide a sufficient number of bacteria to ensure adequate nodulation and/or enhanced symbiotic nitrogen fixation. Additional rhizobial species, such as those set forth herein, may be added to the compositions of the present invention.

Suitable nitrogen-fixing microorganisms useful in inoculant compositions, where included, include rhizobial species. Suitable rhizobial species include *Bradyrhizobium japonicum, Bradyrhizobium parasponia, Sinorhizobium meliloti, Rhizobium leguminosarum* biovars *phaseoli, viceae, and trifolii, Rhizobium lupini,* and *Bradyrhizobium sp. (Arachis).* Selection of a suitable strain of a given species depends on a number of factors, including, but not limited to, ecological factors such as competitive capacity with soil microorganisms, ability to form nodules on the roots of a particular leguminous plant species, efficient nitrogen fixation, and additional factors such as growth and formulation characteristics. Suitably, the microorganisms are present in the seed inoculant composition such that application provides at least 1 x 10⁵ viable colony forming units ("cfu") per large seed, such as soybean seeds. For smaller seeds, the inoculant composition suitably provides about 1 x 10³ to about 5 x 10³ cfu/seed.

Additional components may be included in the inoculant composition to improve, e.g., adherence and flowability characteristics and microorganism compatibility. Examples of additional components include surfactants, osmoprotectants and emulsifying agents.

An agriculturally suitable carrier may also used in the methods and compositions of the invention. Carriers may be liquids, dusts, flowables or powders as used in the art. Typically, if an inoculant composition is included, a liquid carrier is used which includes growth media to culture the microorganisms. Non-limiting examples of suitable growth media for rhizobia include mannitol yeast extract and glycerol yeast extract. Other species of agronomically beneficial microorganisms may be grown in any media known to those in the art to be compatible with, and/or provide growth nutrients to, the desired species.

Surprisingly, the inventors have found that when a suitable fungicide, insecticide, or combination thereof, is used in conjunction with a plant inducer (e.g., nod factors) to treat legume or non-legume seeds, seedlings, roots or plants, a superior, and in some cases, synergistic effect on plant stand, growth, vigor, grain yield or seed yield is observed. The reason for this synergistic enhancement with respect to these properties is not precisely known. The effect is independent of whether an inoculant composition is included.

Methods of the invention include a treatment step for applying at least one of a fungicide, insecticide, or combination thereof, with a plant inducer, and in some embodiments, an inoculant composition, to legume and non-legume seeds, seedlings, roots or plants. "Treating" or "treatment," as the terms are used herein and in the art, refers to any application which results in contact of seeds, seedlings, roots or plants with an effective amount of a treatment composition or components. Treatment may be accomplished directly, i.e., by application directly on seeds, seedlings, roots or plants (including foliage), or may be accomplished indirectly, i.e., by application to the soil (including in furrow).

As will be understood, treatment with each component may be accomplished sequentially or simultaneously. For example, if a liquid carrier is used, the components may be co-slurried in a commercial treater mix tank and subsequently applied to e.g., seeds by any suitable coating process, e.g., film coating. In the film coating process, a slurry is sprayed onto the seeds in a continuous coating process. Alternatively, for example, if a dust or powder carrier is used, the components can be sequentially applied. With the exception of compositions containing an inoculant, it will also be understood that the compositions may be applied to seeds at any time prior to planting or at the time of sowing by the planting apparatus. Accordingly, treatment may also encompass foliar application and/or application of the compositions in furrow.

Leguminous crops such as soybean, alfalfa, peanut, pea, lentil, bean, and clover, among others, are suitably treated using the presently described methods. Non-leguminous crops including, but not limited to, field crops such as corn, cereals, cotton, and canola, and vegetable crops such as potatoes, cucumbers, beets, lettuce, and cantaloupe, are also suitably treated. As will be appreciated, the term "crop" encompasses any plant material that may be harvested.

The following examples are provided to assist in a further understanding of the invention. The particular materials and conditions employed are intended to be further illustrative of the invention and are not limiting upon the reasonable scope thereof.

Examples 1-3 describe particular commercial products that are used in examples 4-13. Examples 4-13, in turn, describe field trial testing and results achieved with nod factor and fungicide and/or insecticide treatments.

### Example 1: Fungicides

Table 1, below, contains examples of suitable commercial fungicide products that may be used in accordance with the invention. Active ingredients are taken from product labels. As will be appreciated, other commercial or non-commercial fungicides may be suitably used, and the following examples are not intended to be limiting.

**Table 1.**

| **Commercial Product** | **Active Ingredients** |
|---|---|
| WARDEN RTA (Agrilance, St. Paul, MN) | Mefenoxam (2.15%), Related compounds (0.06%), Fludioxonil (0.72%), Other ingredients (97.07%) |
| PROTÉGÉ FL (Gustafson, Plano, TX) | Azoxystrobin (21.51%), Inert ingredients (78.49%) |
| RIVAL (Gustafson, Plano, TX) | Captan (19.80%), Related Derivatives (0.45%), Pentachloronitrobenzimidazole (8.40%), Thiabendazole (1.00%), Inert ingredients (70.35%) |
| ALLEGIANCE FL (Gustafson, Plano, TX) | Metalaxyl (28.35%), Inert ingredients (71.65%) |
| APRON MAXX RTA (Syngenta, Wilmington, DE) | Mefenoxam (1.07%), Related Compounds (0.03%), Fludioxonil (0.73%), Other ingredients (98.17%) |
| APRON MAXX RFC (Syngenta, Wilmington, DE) | Fludioxonil (2.31%), Mefenoxam (3.46%), Other ingredients (94.23%) |
| SOYGARD L MULTIPAK (PROTÉGÉ FL + ALLEGIANCE FL + color) (Gustafson, Plano, TX) | (Components listed above) |
| BEAN PAK (APRON XL + MAXIM 4FS+ color) (Syngenta, Wilmington, DE) | APRON XL: Mefenoxam (33.3%), Other ingredients (66.7%) MAXIM 4FS: Fludioxonil (40.3%), Other ingredients (59.7%) |

### Example 2: Insecticides

Table 2, below, contains examples of suitable commercial insecticide products that may be used in the invention. Active ingredients are taken from product labels. As will be appreciated, other commercial or non-commercial insecticides may be suitably used, and the following examples are not intended to be limiting.

**Table 2.**

| **Commercial Product** | **Active Ingredients** |
|---|---|
| GAUCHO (Gustafson, Plano, TX) | Imidacloprid (40.7%), Other ingredients (59.3%) |
| CRUISER (Syngenta, Wilmington, DE) | Thiamethoxam (47.6%), Other ingredients (52.4%) |

### Example 3: Nod factor compositions

One suitable commercially available nod factor product is OPTIMIZE (Nitragin, Milwaukee, WI). This product contains at *Bradyrhizobium japonicum* (2 x 10⁹ rhizobia/gram) and at least 1 x 10⁻⁹ M lipo-oligosaccharide derived from *B. japonicum* in an aqueous carrier. As will be appreciated, other commercial or non-commercial nod factor products may be suitably used.

### Example 4: Soybean field trials: Nod factor + Fungicide

A soybean field trial was conducted to evaluate the effects of treatment with nod factors derived from *S. fredii* combined with commercial fungicides APRONMAXX RTA and BEAN PAK (Syngenta, Wilmington, DE) with respect to grain yield, plant stand, plant vigor and days to canopy. Ten treatments were compared as listed in Table 3. The inoculant, when used, comprised *Bradyrhizobium japonicum* (2 x 10⁹ rhizobia/gram). APRONMAXX RTA was applied as directed by the product label rate of 5.0 fl. oz./cwt. BEAN PAK was also applied as directed (MAXIM 4FS at 0.08 fl. oz./cwt and APRON XL at 0.16 fl. oz./cwt). *S. fredii* was induced and nod factors were purified and applied to seed at a concentration of 10⁻⁷ Molar.

The plot measured 0.011 acres and the rows were spaced 15 inches apart. The soil type was Kidder sandy loam. Soybean Cultivar Dairyland DSR228RR was planted with a JD 750 NT Grain Drill at a depth of 1.0-1.5 inches.

Results are reported in Table 3 below. Parameters evaluated include plant stand (number of plants per acre), plant vigor (relative assessment of plant growth on a scale of 1-9, with 1 = poor vigor and 9 = best vigor), days to canopy and grain yield (bushels/acre). With respect to plant stand and grain yield, the combination of nod factor and fungicide consistently outperformed treatments not combining both components.

**Table 3.**

| **Treatment** | **Grain yield bu/acre** | **V2 plant stand x 1000** | **V2 plant vigor** | **Days to canopy** |
|---|---|---|---|---|
| Untreated control | 50.3 | 159.0 | 6.0 | 74.5 |
| Nod factor | 52.3 | 157.8 | 6.0 | 75.3 |
| Inoculant + Nod factor | 53.8 | 159.0 | 7.3 | 70.3 |
| Inoculant + additive + Nod factor | 54.6 | 159.8 | 7.0 | 69.8 |
| Nod factor + ApronMaxx RTA | 59.3 | 177.5 | 7.3 | 72.3 |
| Nod factor + Bean Pak | 57.7 | 183.0 | 7.3 | 70.3 |
| Inoculant + Nod factor + ApronMaxx RTA | 60.8 | 183.0 | 7.3 | 70.0 |
| Inoculant + Nod factor + Bean Pak | 57.7 | 181.3 | 7.8 | 71.3 |
| Inoculant + additive + Nod factor + ApronMaxx RTA | 58.6 | 182.3 | 7.3 | 69.0 |
| Inoculant + additive + Nod factor + Bean Pak | 59.5 | 184.8 | 7.8 | 71.3 |
| **Probability %** | <0.1 | <0.1 | <0.1 | <0.1 |
| **LSD 10%** | 4.4 | 7.2 | 0.5 | 1.7 |
| **CV%** | 6.6 | 3.7 | 6.0 | 2.0 |

### Example 5: Soybean field trial: Nod factor +Fungicide + Insecticide

A soybean field trial was conducted to evaluate the effect of nod factor and the seed treatment fungicide and insecticide products APRON MAXX RFC and CRUISER 5FS (Syngenta, Wilmington, DE) on crop yield. These products were evaluated for effect on grain yield when applied on soybean seed alone and in all combinations.

The nod factor product OPTIMIZE (Nitragin, Milwaukee, WI) was applied on soybean seed (Jung variety 8258RR) at the label rate of 4.25 fl oz/cwt. APRON MAXX RFC and CRUISER 5FS were applied at the label rate of 1.5 and 1.28 fl oz/cwt, respectively.

The soil type was Milford clay loam soil. The seeding rate was 225,000 seeds/acre at a 7.5" row width. Plot size was 10' x 50' with each treatment replicated four times.

Yield results are presented in Table 4 below. Each of the individual treatments and the combination of APRON MAXX RFC and CRUISER 5FS statistically increased grain yield relative to the non-treated control. The addition of OPTIMIZE to the fungicide, insecticide, or fungicide/insecticide combination consistently increased grain yields relative to OPTIMIZE or the fungicide/insecticide treatments alone. The combination of OPTIMIZE + APRON MAXX RFC and CRUISER 5FS further statistically increased yield compared to OPTIMIZE, APRON MAXX RFC, CRUISER 5FS or the combination of APRON MAXX RFC and CRUISER 5FS alone.

**Table 4.**

| **Treatment** | **Grain yield bu/a** |
|---|---|
| Untreated control | 60.9 |
| Optimize | 65.7 |
| Apron Maxx RFC | 67.3 |
| Cruiser | 66.4 |
| Apron Maxx RFC + Cruiser 5FS | 68.3 |
| Optimize + Apron Maxx RFC | 70.4 |
| Optimize + Cruiser 5FS | 68.0 |
| Optimize + Apron Maxx RFC + Cruiser 5FS | 75.0 |
| **Probability %** | 1.6 |
| **LSD 10%** | 4.4 |
| **CV%** | 5.5 |

### Example 6: Soybean field trial: Nod factor +Fungicide + Insecticide

A soybean field trial was conducted to evaluate the effect of nod factor and the seed treatment fungicide and insecticide products SOYGARD L MULTIPAK and GAUCHO (Gustafson, Plano, TX) on crop yield. The treatments were evaluated for effect on grain yield when applied on soybean seed alone and in all combinations.

OPTIMIZE was applied on soybean seed (Jung variety 8258RR) at the label rate of 4.25 fl oz/cwt. The components of SOYGARD L MULTIPAK (PROTÉGÉ FL, ALLEGIANCE FL, and Colorant) were applied at the label rates of 0.2, 0.2, and 0.2 fl oz/cwt. GAUCHO was applied at the label rate of 2.0 fl oz/cwt.

The soil type was Milford clay loam soil. The seeding rate was 225,000 seeds/acre at a 7.5" row width. Plot size was 10' x 50' with each treatment replicated four times.

Yield results are presented in Table 5 below. Each of the individual treatments and the combination of SOYGARD L MULTI PAK and GAUCHO increased grain yield relative to the non-treated control. For all products with the exception of SOYGARD L MULTI PAK, the increases in yield were statistically significant. The addition of OPTIMIZE to the fungicide, insecticide, or fungicide/insecticide combinations consistently increased grain yields relative to OPTIMIZE or the fungicide/insecticide treatments alone.

**Table 5.**

| **Treatment** | **Grain yield bu/a** |
|---|---|
| Untreated control | 60.9 |
| Optimize | 65.7 |
| SoyGard L. MultiPak | 64.5 |
| Gaucho 480 | 65.4 |
| SoyGard L. Multipack + Gaucho 480 | 67.7 |
| Optimize + SoyGard L. MultiPak | 68.8 |
| Optimize + Gaucho 480 | 67.1 |
| Optimize + SoyGard L. MultiPak + Gaucho 480 | 68.7 |
| **Probability %** | 1.6 |
| **LSD 10%** | 4.4 |
| **CV%** | 5.5 |

### Example 7: Soybean field trial: Nod factor +Fungicide

A soybean field trial was conducted evaluating the effect of nod factor and the seed treatment fungicide product ARPON MAXX RTA (Syngenta, Wilmington, DE) on crop yield. The treatments were evaluated for effect on grain yield when applied on soybean seed alone and in combination.

OPTIMIZE was applied on soybean seed (Jung variety 8258RR) at the label rate of 4.25 fl oz/cwt. APRON MAXX RTA was applied at the label rate of 5 fl oz/cwt.

The soil type was Milford clay loam soil. The seeding rate was 225,000 seeds/acre at a 7.5" row width. Plot size was 10' x 50' with each treatment replicated four times.

Yield results are presented in Table 6 below. Both OPTIMIZE and APRON MAXX RTA significantly increased grain yield relative to the untreated control. The combination of OPTIMIZE and APRON MAXX RTA further increased grain yield relative to the individual treatments alone.

**Table 6.**

| **Treatment** | **Grain yield bu/a** |
|---|---|
| Untreated control | 60.9 |
| Optimize | 65.7 |
| Apron Maxx RTA | 67.4 |
| Optimize + Apron Maxx RTA | 68.3 |
| **Probability %** | 1.6 |
| **LSD 10%** | 4.4 |
| **CV%** | 5.5 |

### Example 8: Soybean field trial: Nod factor +Fungicide

A soybean field trial was conducted to evaluate the effect of nod factor and the seed treatment fungicide product WARDEN RTA (Agrilance, St. Paul, MN) on crop yield. The treatments were evaluated for effect on grain yield when applied on soybean seed alone and in combination.

OPTIMIZE was applied on soybean seed (Jung variety 8258RR) at the label rate of 4.25 fl oz/cwt. WARDEN RTA was applied at the label rate of 5 fl oz/cwt.

The soil type was Milford clay loam soil. The seeding rate was 225,000 seeds/acre at a 7.5" row width. Plot size was 10' x 50' with each treatment replicated four times.

Yield results are presented in Table 7 below. Both OPTIMIZE and WARDEN RTA significantly increased grain yield relative to the untreated control. The combination of OPTIMIZE and WARDEN RTA further increased grain yield relative to the individual treatments alone.

**Table 7.**

| **Treatment** | **Grain yield bu/a** |
|---|---|
| Untreated control | 60.9 |
| Optimize | 65.7 |
| Warden RTA | 65.7 |
| Optimize + Warden RTA | 67.1 |
| **Probability %** | 1.6 |
| **LSD 10%** | 4.4 |
| **CV%** | 5.5 |

### Example 9: Soybean field trial: Nod factor +Fungicide combination

A soybean field trial was conducted to evaluate the effect of nod factor and the seed treatment fungicide products RIVAL and ALLEGIANCE FL on crop yield (Gustafson, Plano, TX). The treatments were evaluated for effect on grain yield when applied on soybean seed alone and in combination.

OPTIMIZE was applied on soybean seed (Jung variety 8258RR) at the label rate of 4.25 fl oz/cwt. RIVAL and ALLEGIANCE FL were applied at their label rates of 4.0 and 0.75 fl oz/cwt, respectively.

The soil type was Milford clay loam soil. The seeding rate was 225,000 seeds/acre at a 7.5" row width. Plot size was 10' x 50' with each treatment replicated four times.

Yield results are presented in Table 8 below. Both OPTIMIZE and RIVAL + ALLEGIANCE significantly increased grain yield relative to the untreated control. The combination of OPTIMIZE and RIVAL + ALLEGIANCE further increased grain yield relative to the individual treatments alone.

**Table 8.**

| **Treatment** | **Grain yield bu/a** |
|---|---|
| Control - non-inoculated | 60.9 |
| Optimize | 65.7 |
| Rival + Allegiance FL | 66.2 |
| Optimize + Rival/Allegiance FL | 67.4 |
| **Probability %** | 1.6 |
| **LSD 10%** | 4.4 |
| **CV%** | 5.5 |

### Example 10: Corn field trial: Nod factor +Fungicide + Insecticide

A corn field trial was conducted to evaluate the effect of nod factors derived from *S. fredii* strain NGR-234 and the seed treatment fungicide and insecticide products MAXIM XL and CRUISER 5FS (Syngenta, Wilmington, DE) and insecticide product PONCHO 600 (Gustafson, Plano, TX) on plant stand, plant vigor and grain yield. The treatments were evaluated for effect on plant growth and yield when applied on corn seed alone and in combination.

A 10⁻⁷ M aqueous suspension of purified nod factor was applied on corn seed (Jung variety 2445) at a rate of 4.54 ml/lb. MAXIM XL, CRUISER 5FS, and PONCHO 600 were each applied at their label rate.

The soil type was Milford silty clay loam. The seeding rate was 32,000 seeds/acre at a 30" row width. Plot size was 15' x 50' with each treatment replicated four times.

The results are presented in Table 9 below. Parameters evaluated include plant stand (number of plants per acre), plant vigor (relative assessment of plant growth on a scale of 1-9, with 1 = poor vigor and 9 = best vigor), and grain yield (bushels/acre). The nod factor treatment significantly improved stand and vigor and numerically improved yield relative to the control treatment, while the MAXIM treatment showed significant increases across all three parameters. The combination of nod factor and MAXIM significantly increased yield, stand, and vigor relative to the nod factor treatment alone and numerically increased these parameters relative to the fungicide treatment alone. Addition of the insecticide products PONCHO and CRUISER produced consistent increases in yield, stand, and vigor relative to the MAXIM + nod factor treatment.

**Table 9.**

| **Treatment** | **Grain yield bu/a** | **V4 plant stand x1000** | **V4 plant vigor 1-9** |
|---|---|---|---|
| Untreated control | 163.6 | 29.2 | 5.9 |
| Nod factor | 167.9 | 30.0 | 6.9 |
| Maxim XL | 178.2 | 30.6 | 7.1 |
| Maxim XL + Nod Factor | 181.8 | 30.8 | 7.3 |
| Maxim XL + Poncho 600 + Nod Factor | 185.4 | 31.4 | 8.0 |
| Maxim XL + Cruiser 5FS + Nod Factor | 185.8 | 31.4 | 7.6 |
| **Probability %** | <0.1 | <0.1 | <0.1 |
| **LSD 10%** | 5.6 | 0.5 | 0.5 |
| **CV%** | 2.6 | 1.3 | 6.2 |

### Example 11: Corn field trial: Nod factor +Fungicide

A corn field trial was conducted to evaluate the effect of nod factors derived from *S. fredii* strain NGR-234 and the seed treatment fungicide products CAPTAN 400 + ALLEGIANCE FL (Gustafson, Plano, TX) on plant growth and yield. The treatments were evaluated for effect on plant growth and yield when applied on corn seed alone and in combination.

A 10⁻⁷ M aqueous suspension of purified nod factor was applied on corn seed (Jung variety 2445) at a rate of 4.54 ml/lb. CAPTAN 400 and ALLEGIANCE FL were each applied at their label rate.

The soil type was Milford silty clay loam soil. The seeding rate was 32,000 seeds/acre at a 30" row width. Plot size was 15' x 50' with each treatment replicated four times.

The results are presented in Table 10 below. Parameters evaluated include plant stand (number of plants per acre), plant vigor (relative assessment of plant growth on a scale of 1-9, with 1 = poor vigor and 9 = best vigor), and grain yield (bushels/acre). The nod factor treatment significantly improved stand and vigor and numerically improved yield relative to the control treatment, while the CAPTAN + ALLEGIANCE treatment showed significant increases across all three parameters. The combination of nod factor and CAPTAN + ALLEGIANCE significantly increased yield relative to both the nod factor and fungicide treatments. Stand, and vigor were improved numerically relative to the nod factor treatment alone and improved significantly relative to the fungicide treatment alone.

**Table 10.**

| **Treatment** | **Grain yield bu/a** | **V4 plant stand x1000** | **V4 plant vigor 1-9** |
|---|---|---|---|
| Untreated control | 163.6 | 29.2 | 5.9 |
| Nod factor | 167.9 | 30.0 | 6.9 |
| Captan/Allegiance | 170.6 | 30.5 | 7.1 |
| Captan/Allegiance + Nod Factor | 179.2 | 30.8 | 7.5 |
| **Probability %** | <0.1 | <0.1 | <0.1 |
| **LSD 10%** | 5.6 | 0.5 | 0.5 |
| **CV%** | 2.6 | 1.3 | 6.2 |

### Example 12: Corn field trial: Nod factor +Fungicide + Insecticide

A corn field trial was conducted to evaluate the effect of nod factors derived from *S. fredii* strain NGR-234 and the seed treatment fungicide and insecticide products MAXIM XL and CRUISER 5FS (Syngenta, Wilmington, DE) and insecticide product PONCHO 600 (Gustafson, Plano, TX) on plant growth and yield. The treatments were evaluated for effect on plant growth and yield when applied on corn seed alone and in combination.

A 10⁻⁷ M aqueous suspension of purified nod factor was applied on corn seed (Jung variety 2445) at a rate of 4.54 ml/lb. MAXIM XL, CRUISER 5FS, and PONCHO 600 were each applied at their label rate.

The soil type was Milford silty clay loam soil. The seeding rate was 32,000 seeds/acre at a 30" row width. Plot size was 15' x 50' with each treatment replicated four times.

The results are presented in Table 11 below. Parameters evaluated include plant stand (number of plants per acre), plant vigor (relative assessment of plant growth on a scale of 1-9, with 1 = poor vigor and 9 = best vigor), and grain yield (bushels/acre). The nod factor treatment significantly improved both stand and vigor and numerically improved yield relative to the control treatment, while the MAXIM treatment significantly increased all three parameters. The combined nod factor + fungicide treatment significantly increased yield compared to both the nod factor and fungicide treatments alone. Addition of the insecticides PONCHO and CRUISER produced significant increases in yield, stand, and vigor relative to the nod factor + fungicide treatment.

**Table 11.**

| **Treatment** | **Grain yield bu/a** | **V4 plant stand x1000** | **V4 plant vigor** |
|---|---|---|---|
| Untreated control | 213.9 | 30.8 | 6.6 |
| Nod factor | 217.4 | 31.3 | 7.4 |
| Maxim XL | 222.4 | 31.4 | 7.6 |
| Maxim XL + Nod Factor | 226.7 | 31.5 | 7.6 |
| Maxim XL + Poncho 600 + Nod Factor | 231.6 | 31.8 | 8.5 |
| Maxim XL + Cruiser 5FS + Nod Factor | 237.4 | 31.8 | 8.4 |
| **Probability %** | <0.1 | <0.1 | <0.1 |
| **LSD 10%** | 3.9 | 0.3 | 0.5 |
| **CV%** | 1.4 | 1.9 | 5.2 |

### Example 13: Corn field trial: Nod factor +Fungicide

A corn field trial was conducted to evaluate the effect of nod factors derived from *S. fredii* strain NGR-234 and the seed treatment fungicide products CAPTAN 400 + ALLEGIANCE FL (Gustafson, Plano, TX) on plant growth and yield. The products were evaluated for effect on plant growth and yield when applied on corn seed alone and in combination.

A 10⁻⁷ M aqueous suspension of purified nod factor was applied on corn seed (Jung variety 2445) at a rate of 4.54 ml/lb. CAPTAN 400 and ALLEGIANCE FL were each applied at their label rate.

The soil type was Milford silty clay loam soil. The seeding rate was 32,000 seeds/acre at a 30" row width. Plot size was 15' x 50' with each treatment replicated four times.

The results are presented in Table 12 below. Parameters evaluated include plant stand (number of plants per acre), plant vigor (relative assessment of plant growth on a scale of 1-9, with 1 = poor vigor and 9 = best vigor), and grain yield (bushels/acre). The nod factor treatment significantly improved stand and vigor compared to the control treatment, while yield was improved numerically. The CAPTAN + ALLEGIANCE treatment produced significant increases across all three parameters. The combination of nod factor and CAPTAN + ALLEGIANCE significantly increased yield relative to both the nod factor and fungicide treatments. Stand and vigor were improved numerically relative to both the nod factor and fungicide treatments.

**Table 12.**

| **Treatment** | **Grain yield bu/a** | **V4 plant stand x1000** | **V4 plant vigor 1-9** |
|---|---|---|---|
| Untreated control | 213.9 | 30.8 | 6.6 |
| Nod factor | 217.4 | 31.3 | 7.4 |
| Captan/Allegiance | 219.0 | 31.3 | 7.6 |
| Captan/Allegiance + Nod Factor | 225.5 | 31.5 | 7.9 |
| | 224.2 | 31.4 | 7.7 |
| **Probability %** | <0.1 | <0.1 | <0.1 |
| **LSD 10%** | 3.9 | 0.3 | 0.5 |
| **CV%** | 1.4 | 0.9 | 5.2 |

While the present invention has now been described and exemplified with some specificity, those skilled in the art will appreciate the various modifications, including variations, additions and omissions, that may be made in what has been described.

All patents, publications and references cited herein are hereby fully incorporated by reference. In case of conflict between the present disclosure and incorporated patents, publications and references, the present disclosure should control.

The invention is further described in the following paragraphs.
1) A method of enhancing a plant characteristic, comprising treating a seed, seedling, root or plant, or combinations thereof, with:
   a) a plant inducer; and
   b) a fungicide, an insecticide, or combinations thereof,
   thereby enhancing the plant characteristic.
2) The method of paragraph 1, wherein the plant characteristic comprises plant stand, growth, vigor or yield, or combinations thereof.
3) The method of paragraph 1, wherein a seed, seedling, root or plant is treated with a plant inducer, a fungicide and an insecticide.
4) The method of paragraph 1 wherein the plant inducer comprises a nod factor.
5) The method of paragraph 4, wherein the nod factor is derived from *Bradyrhizobium japonicum, Sinorhizobium fredii, Sinorhizobium meliloti, Bradyrhizobium sp.* (Arachis), and *Rhizobium leguminosarum* biovar *phaseoli, viceae,* or *trifolii.*
6) The method of paragraph 1 wherein the fungicide exhibits activity against *Phytophthora, Rhizoctonia, Fusarium, Pythium, Phomopsis, Sclerotinia,* or Phakopsora, or combinations thereof.
7) The method of paragraph 1, wherein the fungicide comprises mefenoxam, fludioxonil, azoxystrobin, pentachloronitrobenzimidazole, captan or metalaxyl, or combinations thereof.
8) The method of paragraph 1, wherein the insecticide exhibits activity against wireworms, cutworms, grubs, corn rootworms, seed corn maggots, flea beetles, chinch bugs, aphids, leaf beetles, stink bugs, or combinations thereof.
9) The method of paragraph 1, wherein the insecticide comprises imidacloprid, thiamethoxam, or combinations thereof.
10) The method of paragraph 1, further comprising treating the seeds, seedlings, roots or plants, or combinations thereof, with an inoculant composition.
11) The method of paragraph 10, wherein the inoculant composition comprises a rhizobial species.
12) The method of paragraph 11, wherein the inoculant composition comprises Bradyrhizobium japonicum, Bradyrhizobium parasponia, Sinorhizobium meliloti, Rhizobium leguminosarum biovars phaseoli, viceae, and trifolii, Rhizobium lupini, or Bradyrhizobium sp. (Arachis), or combinations thereof.
13) The method of paragraph 1, wherein the plant is a legume.
14) The method of paragraph 13, wherein the legume comprises soybean, alfalfa, peanut, pea, lentil, bean, or clover.
15) The method of paragraph 1, wherein the plant is a non-legume.
16) The method of paragraph 15, wherein the non-legume comprises corn, cereals, cotton, canola, potatoes, cucumbers, beets, lettuce or cantaloupe.
17) A composition comprising:
   a) a plant inducer; and
   b) a fungicide, an insecticide, or mixtures thereof.
18) A composition comprising a plant inducer, a fungicide and an insecticide in an agriculturally suitable carrier.
19) The composition of paragraph 17, wherein the fungicide exhibits activity against *Phytophthora, Rhizoctonia, Fusarium, Pythium, Phomopsis, Sclerotinia,* or *Phakopsora,* or combinations thereof.
20) The composition of paragraph 17, wherein the fungicide comprises mefenoxam, fludioxonil, azoxystrobin, pentachloronitrobenzimidazole, captan or metalaxyl, or combinations thereof.
21) The composition of paragraph 17, wherein the insecticide exhibits activity against wireworms, cutworms, grubs, corn rootworms, seed corn maggots, flea beches, chinch bugs, aphids, leaf beetles, stink bugs, or combinations thereof.
22) The composition of paragraph 17, wherein the insecticide comprises imidacloprid, thiamethoxam, or combinations thereof.
23) The composition of paragraph 17 wherein the plant inducer comprises a nod factor.
24) The composition of paragraph 23, wherein the nod factor is derived from *Bradyrhizobium japonicum, Sinorhizobium fredii, Sinorhizobium meliloti, Bradyrhizobium sp.* (Arachis), and *Rhizobium leguminosarum biovar phaseoli, viceae,* or *trifolii.*
25) The composition of paragraph 17, further comprising an inoculant composition.
26) The composition of paragraph 25, wherein the inoculant composition comprises at least one rhizobial species.
27) The composition of paragraph 26, wherein the rhizobial species comprises *Bradyrhizobium japonicum, Bradyrhizobium parasponia, Sinorhizobium meliloti, Rhizobium leguminosarum* biovars *phaseoli, viceae,* and *trifolii, Rhizobium lupini,* or *Bradyrhizobium sp. (Arachis),* or combinations thereof.
28) A method of enhancing grain yield comprising:
   a) treating legume or non-legume seeds, seedlings, roots or plants with at least one nod factor in an agriculturally suitable carrier; and
   b) treating the seeds, seedlings roots or plants with an insecticide, a fungicide or combinations thereof, thereby enhancing grain yield.

## Claims

1. A method of enhancing plant stand, growth, vigor or yield, comprising treating a seed, seedling, root or plant, or combinations thereof, with a nod factor and a fungicide that comprises mefenoxam, fludioxonil, captan, pentachloronitrobenzimidazole, thiabendazole and/or metalaxyl.

2. The method of claim 1, wherein the fungicide comprises mefenoxam, fludioxonil and/or metalaxyl.

3. The method of any one of claims 1 to 2, wherein the method further comprises treating the seed, seedling, root or plant, or combination thereof, with an insecticide.

4. The method of claim 3, wherein the insecticide comprises imidacloprid, thiamethoxam and/or clothianidin.

5. The method of any one of claims 1 to 4, wherein the method further comprises treating the seed, seedling, root or plant, or combination thereof, with one or more microorganisms.

6. The method of claim 5, wherein the seed, seedling, root or plant, or combination thereof, is treated with one or more strains of *Bradyrhizobium japonicum,* one or more strains of *Bradyrhizobium parasomnia,* one or more strains of *Sinorhizobium meliloti,* one or more strains of *Rhizobium leguminosarum* biovars *phaseoli, viceae, trifolii,* one or more strains of *Rhizobium lupine,* and/or one or more strains of *Bradyrhizobium sp. (Arachis).*

7. The method of any one of claims 1 to 6, wherein the plant is a legume.

8. The method of any one of claims 1 to 6, wherein the plant is an alfalfa, bean, clover, lentil, pea, peanut or soybean plant.

9. The method of any one of claims 1 to 6, wherein the plant is a non-legume.

10. The method of any one of claims 1 to 6, wherein the plant is a beet, canola, cantaloupe, cereal, corn, cotton, cucumber, lettuce or potato plant.

11. A composition for enhancing plant stand, growth, vigor or yield comprising a nod factor and a fungicide, wherein the fungicide comprises mefenoxam, fludioxonil, captan, pentachloronitrobenzimidazole, thiabendazole and/or metalaxyl.

12. The composition of claim 11, wherein the fungicide comprises mefenoxam, fludioxonil and/or metalaxyl.

13. The composition of any one of claims 11 to 12, wherein the composition further comprises an insecticide.

14. The composition of claim 13, wherein the insecticide comprises imidacloprid, thiamethoxam and/or clothianidin.

15. The composition of any one of claims 11 to 14, wherein the composition further comprises one or more microorganisms.

16. The composition of any one of claims 11 to 15, wherein the composition further comprises one or more strains of *Bradyrhizobium japonicum,* one or more strains of *Bradyrhizobium parasomnia,* one or more strains of *Sinorhizobium meliloti,* one or more strains of *Rhizobium leguminosarum* biovars *phaseoli, viceae, trifolii,* one or more strains of *Rhizobium lupine,* and/or one or more strains of *Bradyrhizobium sp. (Arachis).*
